# EUROPÄISCHE PATENTSCHRIFT

(11) **EP 2 886 394 B1**
(45) Veröffentlichungstag und Bekanntmachung des Hinweises auf die Patenterteilung: **28.06.2017**
(21) Anmeldenummer: 14194931.3
(22) Anmeldetag: 26.11.2014
(51) Int. Cl.: B60Q 1/076, B60Q 1/10, B60Q 1/12, F21S 8/10

(54) **Beleuchtungsvorrichtung für einen Kraftfahrzeugscheinwerfer**
Lighting device for a motor vehicle headlight
Dispositif d'éclairage pour un phare de véhicule automobile

(30) Priorität: 20.12.2013 AT 508472013
(43) Veröffentlichungstag der Anmeldung: 24.06.2015
(73) Patentinhaber: ZKW Group GmbH, 3250 Wieselburg (AT)
(72) Erfinder: Baminger, Peter, 3241 Kirnberg (AT)
(74) Vertreter: Patentanwaltskanzlei Matschnig & Forsthuber OG

(56) Entgegenhaltungen:
- EP-A1- 1 270 323
- EP-A1- 2 305 514
- EP-A1- 2 578 451
- EP-A2- 1 234 716
- DE-A1- 19 810 480
- JP-A- 2009 283 417
- US-A1- 2011 044 063

## Beschreibung

Die Erfindung betrifft eine Beleuchtungsvorrichtung für einen Kraftfahrzeugscheinwerfer, wobei die Beleuchtungsvorrichtung eine optische relevante Baueinheit umfasst, welche Baueinheit um zwei zueinander normal verlaufende Verschwenkachsen in einem Gehäuse verschwenkbar ist.

Bei einer optisch relevanten Baueinheit handelt es sich beispielsweise um ein Lichtmodul, um eine Lichtmodul-Einheit, welche aus einer oder mehreren Lichtmodulen besteht, oder um einen oder mehrere Bauteile eines solchen Lichtmoduls oder einer solchen Lichtmodul-Einheit, wobei dieser Bauteil oder diese Bauteile einen Einfluss auf die mit dem Lichtmodul oder die mit der Lichtmodul-Einheit erzeugte Lichtverteilung haben.

Mit einem Lichtmodul kann eine bestimmte Lichtverteilung, etwa eine Fernlichtverteilung, eine abgeblendete Lichtverteilung, wie etwa ein Abblendlicht, eine Nebellichtverteilung etc. erzeugt werden, oder ein Lichtmodul dient im Rahmen einer Lichtmodul-Einheit zur Erzeugung eines Teiles einer solchen Lichtverteilung.

Bei einer (optisch relevanten) Baueinheit eines Lichtmoduls oder einer Lichtmodul-Einheit, welches Einfluss auf die mit dem Lichtmodul oder die mit der Lichtmodul-Einheit erzeugte Lichtverteilung hat, handelt es sich in der Regel um einen Bauteil, z.B. kann es sich beispielsweise um einen Reflektor, eine Linse, eine Blende, eine Lichtquelle bzw. eine Lichtquellen-Anordnung oder um andere Licht formende Mittel, wie Lichtleiter, Lichtleitkörper etc. handeln.

Zum Einstellen des Lichtbildes und/oder zur Erzeugung von dynamischen Lichtverteilungen, etwa zur Erzeugung eines dynamischen Kurvenlichtes und/oder einer dynamischen Leuchtweitenregulierung ist häufig vorgesehen, dass eine optische relevante Baueinheit (wie oben beschrieben ist Baueinheit im Sinne einer tatsächlichen Einheit aus mehreren Bauteilen, aber auch als einzelner Bauteil zu verstehen) um eine, vorzugsweise um zwei Achsen, z.B. eine horizontale Achse und eine vertikale Achse verschwenkbar ist.

Beleuchtungsvorrichtungen für Kraftfahrzeugscheinwerfer, die um zumindest eine Achse verschwenkbar sind, sind dem Stand der Technik bekannt.

Die europäische Patentanmeldung EP 2578451 A1 zeigt z.B. ein Stellglied für einen Fahrzeugscheinwerfer, das ein Gehäuse und mindestens eine Stützplatte für eine oder mehrere Lichtquellen und ein Betätigungssystem der Neigung umfasst. Dabei ist die Stützplatte mittels eines Drehzapfens auf einem Rotationsorgan montiert und um den Drehzapfen verdrehbar gelagert. Die Längsrichtung des Drehzapfens bestimmt also eine erste Schwenkachse. Eine zweite Schwenkachse verläuft orthogonal zu einer axialen Verlagerungsrichtung. Um diese Achse ist das Rotationsorgan in eine Richtung verschwenkbar. Beide Schwenkachsen verlaufen dabei allerdings horizontal. Aus diesem Grund kann dieses Stellglied bei einem Kurvenlichtmodul nicht eingesetzt werden.

Des Weiteren offenbart die europäische Patentanmeldung EP 1270323 A1 eine Stellvorrichtung zur gesteuerten Einstellung eines Lichtbündels, welches von einem Scheinwerfer eines Fahrzeugs ausgesendet wird, wobei der Scheinwerfer oder eine die Richtung des Lichtbündels beeinflussende Scheinwerferkomponente, beispielsweise eine Linse oder ein Reflektor, des Scheinwerfers um mindestens zwei Schwenkachsen schwenkbar ist.

Das Dokument US 2011 /0044063 A1 betrifft eine um zwei Achsen verschwenkbare Leuchte für Kraftfahrzeuge. Die deutsche Patentanmeldung DE 19810480 A1 offenbart ein Scheinwerfer, bei dem der Reflektor sowohl um die horizontale als auch um die vertikale Achse fernverstellbar ist. Dabei wird der Reflektor mittels eines Antriebssystems verschwenkt, das an dem Scheinwerfer-Gehäuse um einen vertikalen Verstellwinkel schwenkbar gelagert ist.

In den oben genannten Beispielen ist die optisch relevante Baueinheit, beispielsweise das zu verschwenkende Lichtmodul in einem Tragrahmen o. Ä. Bauteil gelagert, welcher beispielsweise um eine erste Achse an einem weiteren Tragrahmen gelagert sein kann. Dieser zweite Tragrahmen ist um eine zweite Achse in einem Gehäuse der Beleuchtungsvorrichtung bzw. des Fahrzeugscheinwerfers, in welchem sich die Beleuchtungsvorrichtung befindet, verschwenkbar gelagert.

Solche Tragrahmen sind üblicherweise groß und stabil und benötigen einerseits entsprechenden Bauraum und andererseits zum dynamischen Verschwenken entsprechend starke Antriebe.

Es ist eine Aufgabe der Erfindung, eine Beleuchtungsvorrichtung zu schaffen, welche ein Verschwenken einer optisch relevanten Baueinheit um zwei Achsen ermöglicht, und welche einen geringeren Platzbedarf aufweist als aus dem Stand der Technik bekannte Vorrichtungen.

Weiters betrifft die Erfindung einen Fahrzeugscheinwerfer mit zumindest einer solchen Beleuchtungsvorrichtung.

Diese Aufgabe wird mit einer eingangs erwähnten Beleuchtungsvorrichtung dadurch gelöst, dass erfindungsgemäß zum Verschwenken um jede der Achsen jeweils ein Antrieb vorgesehen ist, wobei die beiden Antriebe feststehend in dem Gehäuse angeordnet sind, wobei der erste Antrieb zum Verschwenken der Baueinheit um die erste Achse ein Linearantriebselement umfasst bzw. antreibt, welches Linearantriebselement mit der Baueinheit mittels eines Gelenkes gelenkig verbunden ist, und wobei weiters ein Mitnehmerelement vorgesehen ist, welches Mitnehmerelement zumindest eine Lagerstelle, vorzugsweise zwei Lagerstellen aufweist, in welcher zumindest einen Lagerstelle die Baueinheit um die erste Achse verschwenkbar gelagert ist, und wobei das Mitnehmerelement in einer Ebene normal auf die zweite Achse um diese zweite Achse verschwenkbar in dem Gehäuse gelagert ist, und wobei die zumindest eine Lagerstelle derart ausgebildet ist, dass bei einem Verdrehen des Mitnehmerelementes um die zweite Achse die Baueinheit mit dem Mitnehmerelement mit verdreht wird, und wobei der zweite Antrieb das Mitnehmerelement um die zweite Achse verdreht.

Mit der erfindungsgemäßen Ausgestaltung kann auf die Verwendung von Tragrahmen verzichtet werden. Entsprechend wird der Platzbedarf verringert. Außerdem sind geringere Massen beim Verschwenken zu bewegen, sodass schwächere Antriebe verwendet werden können. Bei bekannten Lösungen wird in der Regel eine Leuchteinheit (Lichtmodul) in einem Tragrahmen befestigt und mitsamt diesem Tragrahmen verschwenkt (d.h. eine Verstelleinrichtung greift an dem Tragrahmen an, verschwenkt diesen und entsprechend wird das Lichtmodul mitverschwenkt). Auf dem Tragrahmen sitzt zumeist noch ein Kurvenlichtmotor, der das Lichtmodul relativ zu dem Tragrahmen verschwenkt. Eine solche Anordnung benötigt im Gegensatz zu der vorliegenden Erfindung deutlich mehr Platz, ist instabiler und fehleranfälliger. Bei der vorliegenden Erfindung wird im Gegensatz zum Stand der Technik die optisch relevante Baueinheit, z.B. eben ein Lichtmodul verschwenkt, indem die Verstelleinrichtungen direkt an der optisch relevanten Baueinheit angreifen, auf Tragrahmen wird verzichtet.

Um eine Einstellung bzw. Verstellung, insbesondere dynamische Verstellung des Lichtbildes in vertikaler Richtung (auf/ab) vornehmen zu können, ist vorgesehen, dass vorzugsweise die erste Achse eine Horizontalachse ist, welche normal auf die optische Achse der Beleuchtungsvorrichtung steht.

Um eine Einstellung bzw. Verstellung, insbesondere dynamische Verstellung des Lichtbildes in horizontaler Richtung (links/rechts) vornehmen zu können, ist vorgesehen, dass alternativ oder vorzugsweise zusätzlich die zweite Achse eine Vertikalachse ist, welche normal auf die erste Achse und die optische Achse der Beleuchtungsvorrichtung steht.

Von besonderem Vorteil ist es, wenn die zweite Achse in der Nähe des Massen-Schwerpunktes oder durch den Massen-Schwerpunkt der optisch relevanten Baueinheit verläuft. Falls die Achse nicht durch den Schwerpunkt läuft entsteht, bei mechanischen Beanspruchungen, etwa einem Rütteln im Fahrbetrieb und den dabei auftretenden Beschleunigungskräften durch den Abstand von Schwerpunkt zur Achse durch die Masse der Baueinheit ein Drehmoment, das vom Antrieb abgefedert werden muss. Dieses Drehmoment und die Anforderung, ein Kurvenlicht oder eine Leuchtweitenregelung unter diesen Bedingungen trotzdem dynamisch ansteuern zu können, stellen in diesem Fall die hohe Anforderungen an den Antrieb, die durch die vorzugsweise beschriebene Anordnung reduziert werden können.

Weiters ist erfindungsgemäß vorgesehen, dass die erste und die zweite Achse einander schneiden. Auf diese Weise kann der notwendige Bauraum klein gehalten werden.

Weiters ist es von Vorteil, wenn das Linearantriebselement, welches von dem ersten Antrieb angetrieben ist, eine Zahnstange ist. Damit können größere Verstellwinkel bei größeren Schwenkhebellängen erzielt werden, insbesondere im Zusammenhang mit der Verwendung von rotierenden Antrieben, z.B. Drehmotoren. Beim Einsatz einer Verstellung mit Zahnstange können einerseits durch die Getriebeabstimmung bzw. die Ausgestaltung des Zahnkranzes das Verstellmoment und andererseits die Verstellgeschwindigkeit gut angepasst werden. Der mögliche Verstellwinkel an ist sich bei Verwendung eines rotierenden Antriebes nicht begrenzt.

Außerdem kann mit Vorteil vorgesehen sein, dass das Mitnehmerelement zumindest einen Zahnkranz umfasst, mit zumindest einem Zahnkranz verbunden ist oder als Zahnkranz ausgebildet ist.

Der Zahnkranz ist dabei nur über einen, vorzugsweise kleinen, Teilkreis ausgebildet und nicht über einen Vollkreis, wobei der Teilkreis derart gewählt ist, dass die gewünschte Verschwenkbewegung, d.h. der gewünschte Verschwenkbereich realisierbar ist.

Weiters ist mit Vorteil vorgesehen, dass der zweite Antrieb ein oder mehrere, z.B. zwei Antriebsritzel antreibt, welche Ritzel den zumindest einen Zahnkranz antreiben.

Eine solche Anordnung benötigt wenig Bauraum und es kann damit trotzdem ein ausreichender Verschwenkbereich realisiert werden. Aus Stabilitätsgründen ist eine Anordnung von zwei Antriebsritzeln, eines auf jeder Seite des Zahnkranzes (dieser weist entsprechend auf beiden Seiten Zähne auf), von Vorteil. Bei zu hohem Drehmoment kann es durch eine (zumindest temporäre) Verformung der Teile zu einem Schaden an den Zähnen auf dem Ritzel und dem Zahnkranz kommen. Wenn der Zahnkranz beidseitig mit den Antriebsritzeln eingefasst ist, verteilt sich die Verstellkraft auf doppelt so viele Zähne und die Konstruktion ist dadurch stabiler.

Vorzugsweise ist vorgesehen, dass der erste und/oder der zweite Antrieb als rotierende(r) Antrieb(e) ausgebildet sind (ist).

Um eine optimale, ausreichende Bewegung der optischen Baueinheit zu ermöglichen, ist mit Vorteil vorgesehen, dass das Gelenk ein Kugelgelenk ist.

Dabei ist in einer bevorzugten Ausführungsform vorgesehen, dass das Kugelgelenk eine Kugel umfasst, welche an der Baueinheit oder an dem Linearantriebselement angeordnet ist, und wobei die Kugel in einer Lagerstelle gelagert ist, welche an dem Linearantriebselement oder der Baueinheit angeordnet ist.

Außerdem ist es günstig, wenn die Lagerstelle zylinderförmig ausgebildet ist. In einer Grundstellung, d.h. einer nicht verschwenkten Position der optisch relevanten Baueinheit wird die Zylinderachse von der zweiten Achse gebildet.

Auf diese Weise wird einerseits eine Rotationsbewegung durch das Gelenk ermöglich, andererseits ist auch eine Linearbewegung in Richtung der Zylinderachse möglich. Da sich die Baueinheit um ein sphärisches Lager bewegt und das Linearantriebselement sich linear bewegt, ändert sich durch die Verstellung der Radius von Dreh- zu Angriffspunkt. Diese Längenänderung wird durch die zylindrische Ausgestaltung der Lagerstelle ausgeglichen. Erfindungsgemäß ist weiters noch vorgesehen, dass die optisch relevante Baueinheit weiters an einem dem ersten Gelenk gegenüberliegenden bzw. abgewandten Bereich mit einem weiteren Gelenk an dem Gehäuse gelagert ist.

Die Formulierung "an dem Gehäuse gelagert" bedeutet dabei "gelagert in Bezug auf das Gehäuse"; d.h., die Lagerung muss nicht zwangsläufig direkt an dem Gehäuse erfolgen, sondern kann auch anderen Bauteilen, die an dem Gehäuse feststehend angebracht sind, erfolgen.

Vorzugsweise ist dabei vorgesehen, dass das zweite Gelenk ein Kugelgelenk ist.

Bei einer konkreten Ausführungsform der Erfindung ist vorgesehen dass, die optisch relevante Baueinheit eine Linse und einen Linsenhalter umfasst, wobei der Linsenhalter um die beiden Achsen verschwenkbar gelagert ist. Die Linse ist dabei fix in dem Linsenhalter befestigt bzw. von diesem gehalten.

Bei einer anderen bevorzugten Ausführungsform der Erfindung ist vorgesehen, dass die optisch relevante Baueinheit durch ein Lichtmodul gebildet ist, welches Lichtmodul um die beiden Achsen verschwenkbar gelagert ist.

Insbesondere betrifft die Erfindung eine Beleuchtungsvorrichtung, welche zur Erzeugung eines dynamischen Kurvenlichts und/oder einer dynamischen Leuchtweitenregulierung.

Die eingangs genannten Aufgaben werden weiters gelöst mit einem Fahrzeugscheinwerfer, welcher zumindest eine oben beschriebene Beleuchtungsvorrichtung umfasst, welche zumindest eine Beleuchtungsvorrichtung vorzugsweise in dem Gehäuse des Fahrzeugscheinwerfers angeordnet ist.

Im Folgenden ist die Erfindung an Hand der Zeichnung an einer beispielhaften Ausführungsform näher erläutert. In dieser zeigt
Fig. 1 eine erfindungsgemäße Beleuchtungsvorrichtung in einem Gehäuse in einer Ansicht von Vorne,
Fig. 2 das Gehäuse aus Figur 1 mit Beleuchtungsvorrichtung in einer Seitenansicht,
Fig. 3 eine vergrößerte Darstellung des Details D aus Figur 2,
Fig. 4 eine perspektivische Ansicht der Beleuchtungsvorrichtung von schräg Vorne,
Fig. 5 eine perspektivische Ansicht der Beleuchtungsvorrichtung von schräg Hinten,
Fig. 6 eine Explosionsdarstellung der Beleuchtungsvorrichtung in einer perspektivischen Ansicht von schräg oben, und
Fig. 7 eine Explosionsdarstellung der Beleuchtungsvorrichtung in einer perspektivischen Ansicht von unten.

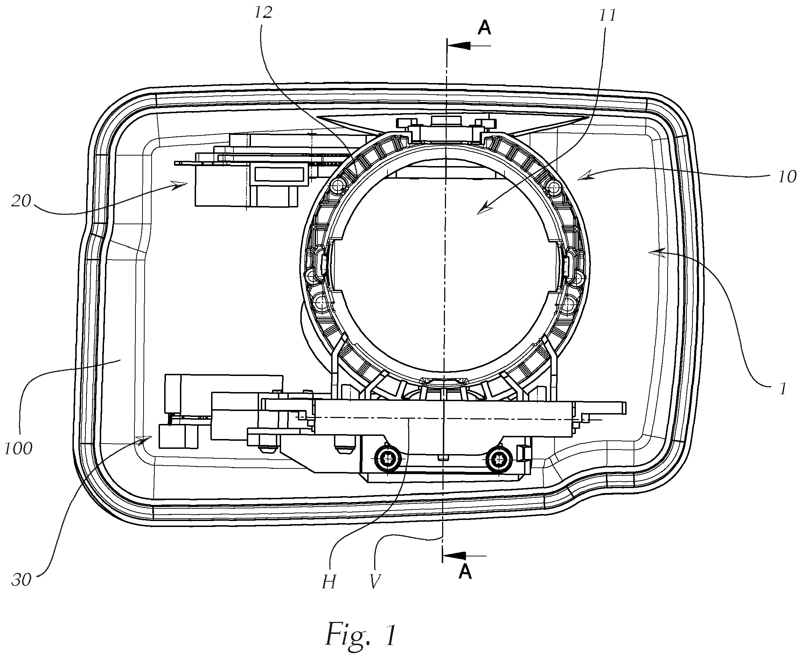

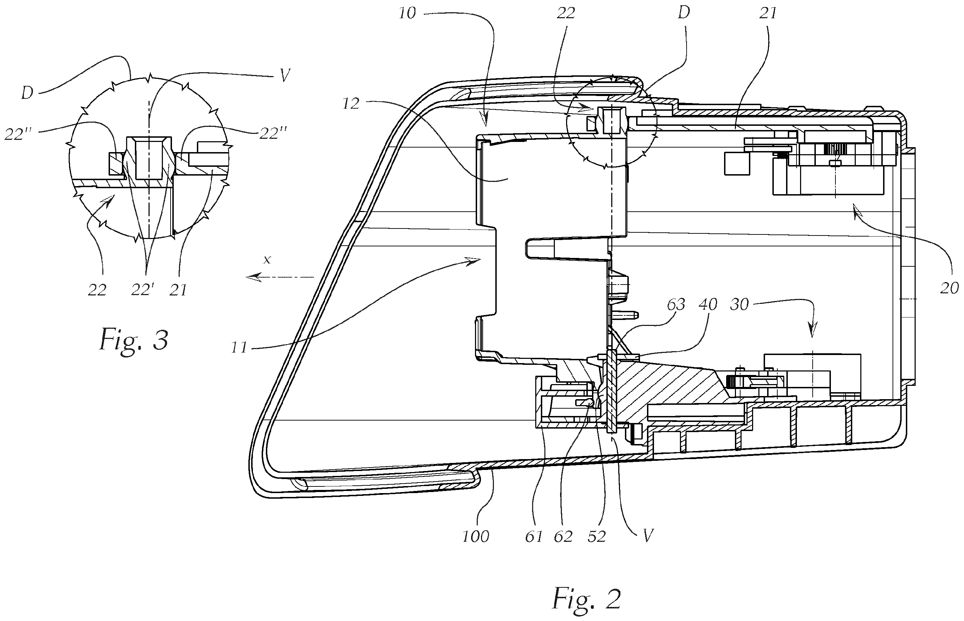

Figur 1 und 2 zeigen ein Gehäuse 100 eines Kraftfahrzeugscheinwerfers, in welchem in dem gezeigten Beispiel eine erfindungsgemäße Beleuchtungsvorrichtung 1 in Form eines Lichtmoduls angeordnet ist. Die Beleuchtungsvorrichtung 1 umfasst z.B. ein oder mehrere nicht dargestellte Lichtquellen, weiters z.B. einen - ebenfalls nicht dargestellten - Licht formenden Körper, etwa einen Reflektor, sowie eine optisch relevante Baueinheit 10, welche um zwei zueinander normal verlaufende Verschwenkachsen H, V in dem Gehäuse 100 verschwenkbar gelagert ist.

Mit einem solchen Lichtmodul 1 kann eine bestimmte Lichtverteilung, etwa eine Fernlichtverteilung, eine abgeblendete Lichtverteilung, wie etwa ein Abblendlicht, eine Nebellichtverteilung etc. erzeugt werden, oder ein Lichtmodul dient im Rahmen einer Lichtmodul-Einheit zur Erzeugung eines Teiles einer solchen Lichtverteilung.

Bei der gezeigten Ausführungsform ist die optisch relevante Baueinheit 10 in Form eines Lichtmoduls ausgebildet. Dieses Lichtmodul 10 besteht in der gezeigten Ausführungsform aus einem Halter 12, an welchem eine Linse 11 fix angebracht ist, welche durch das Bezugszeichen 11 angedeutet aber nicht dargestellt ist. Weiters umfasst ein solches Lichtmodul üblicherweise noch ein oder mehrere Lichtquellen, ein oder mehrere Reflektoren und gegebenenfalls noch eine Blendenanordnung, welche ebenfalls auf bekannte Art und Weise mit dem Halter 12 verbunden sind. Der besseren Übersichtlichkeit halber sind diese Bestandteile des Lichtmoduls in den Figuren nicht dargestellt. Der Halter 12 und somit das Lichtmodul 10 ist um die beiden Achsen H, V verschwenkbar gelagert.

Die erste Achse H ist dabei eine Horizontalachse ist, welche normal auf die optische Achse X der Beleuchtungsvorrichtung 1 steht, die zweite Achse V ist eine Vertikalachse, welche normal auf die erste Achse H und die optische Achse X der Beleuchtungsvorrichtung 1 steht. Vorzugsweise schneiden sich wie gezeigt die erste Achse H und die zweite Achse V.

Von besonderem Vorteil ist es, wenn die zweite Achse V in der Nähe des Schwerpunktes oder durch den Schwerpunkt der optisch relevanten Baueinheit 10 verläuft.

Mit einem dermaßen verschwenkbaren Lichtmodul 10 kann eine Einstellung bzw. Verstellung, insbesondere dynamische Verstellung des Lichtbildes in horizontaler Richtung (links/rechts) vorgenommen werden, zusätzlich kann eine Einstellung bzw. Verstellung, insbesondere dynamische Verstellung des Lichtbildes in vertikaler Richtung (auf/ab) erfolgen.

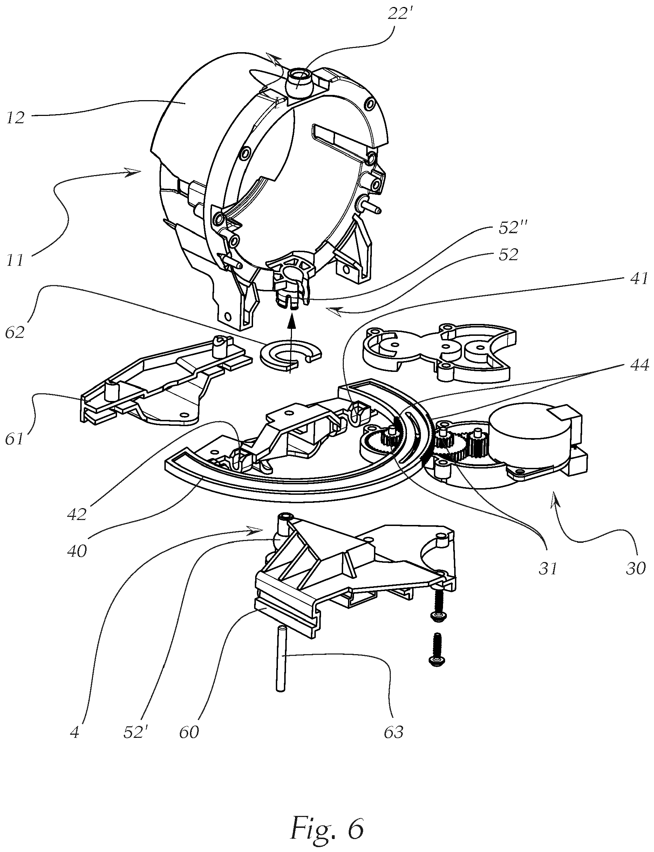

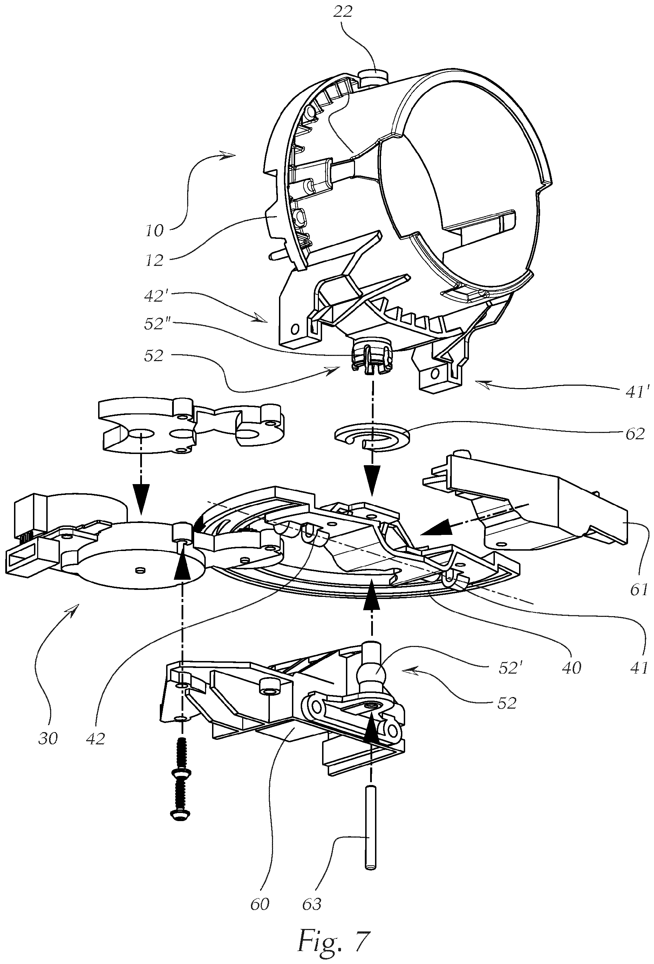

In weiterer Folge wird auf die Figuren 1 - 7 Bezug genommen.

Zum Verschwenken der Baueinheit bzw. des Lichtmoduls 10 um jede der Achsen H, V ist jeweils ein Antrieb 20, 30 vorgesehen, wobei die beiden Antriebe 20, 30 feststehend in dem Gehäuse 100 angeordnet sind.

Der erste Antrieb 20 zum Verschwenken der Baueinheit 10 um die erste, horizontale Achse H treibt ein Linearantriebselement 21 an, welches Linearantriebselement 21 mit der Baueinheit 10, d.h. mit dem Halter 12 mittels eines Gelenkes 22 gelenkig verbunden ist.

Das Linearantriebselement 21, welches von dem ersten Antrieb 20 angetrieben ist, ist dabei eine Zahnstange.

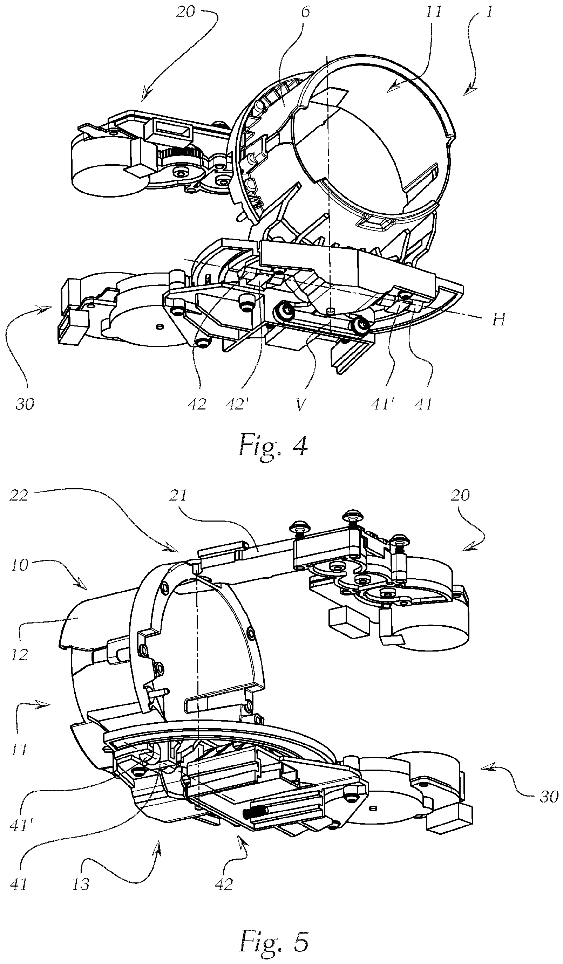

Der erste Antrieb 20 ist dabei ein rotierender Antrieb, der ein Getriebe aus Zahnrädern antreibt (siehe z.B. Figur 4), welche wiederum die Zahnstange 21 antreiben.

Weiters ist ein zweiter Antrieb 30 zum Verschwenken der optischen Baueinheit 10, d.h. insbesondere des Halters 12 vorgesehen. Dazu verdreht der zweite Antrieb 30 ein Mitnehmerelement 40 um die zweite Achse V, wobei dieses Mitnehmerelement 40 zwei Lagerstellen 41, 42 aufweist, in welchen Lagerstellen 41, 42 die Baueinheit 10 bzw. der Halter 12 um die erste Achse H verschwenkbar gelagert ist. Dazu verfügt der Halter 12 um entsprechende Gegenlagerbereiche 41', 42' mit bzw. über welche er in den Lagerstellen 41, 42, an dem Mitnehmerelement 40 um die Achse H verschwenkbar gelagert ist.

Der Halter 12 bzw. die optische Baueinheit 10 ist dabei ausschließlich um die Achse H verschwenkbar an dem Mitnehmerelement 40 gelagert, d.h., die Lagerstellen 41, 42 sind derart ausgebildet, eine Bewegung in anderer Richtung in Bezug auf das Mitnehmerelement 40 ist nicht möglich ist, sodass bei einem Verdrehen des Mitnehmerelementes 40 um die zweite Achse V die Baueinheit 10 mit dem Mitnehmerelement 40 mit verdreht wird.

Das Mitnehmerelement 40 ist weiters in einer Ebene normal auf die zweite Achse V um diese zweite Achse V verschwenkbar in dem Gehäuse 100 gelagert.

Der zweite Antrieb 30 ist wiederum ein rotierender Antrieb, der ein oder mehrere, z.B. zwei Antriebsritzel 31 antreibt, welche Ritzel 31 einen innen und einen außen liegenden Zahnkranz 44 auf dem Mitnehmerelement 40 und somit das Mitnehmerelement 40 antreiben, sodass sich das in der Ebene, in welches es liegt, um die Achse V dreht.

Die Zahnkränze sind dabei nur über einen, vorzugsweise kleinen, Teilkreis wie dargestellt ausgebildet und nicht über einen Vollkreis, wobei der Teilkreis derart gewählt ist, dass die gewünschte Verschwenkbewegung, d.h. der gewünschte Verschwenkbereich realisierbar ist.

Das Gelenk 22, mit welchem der Halter 12 mit der Zahnstange 21 verbunden ist, ist als Kugelgelenk bzw. kugelgelenksartig ausgebildet. Wie insbesondere Figur 3 zu entnehmen ist, ist vorgesehen, dass das Kugelgelenk 22 eine Kugel 22' umfasst, welche an dem Halter 12 angeordnet ist, und wobei die Kugel 22' in einer Lagerstelle 22" gelagert ist, welche an der Zahnstange 21 angeordnet ist.

Die Lagerstelle 22" ist dabei zylinderförmig ausgebildet, wobei die Zylinderachse in einer Grundposition der Baueinheit 10, in welcher diese nicht verschwenkt ist, von der zweiten Achse V gebildet ist. Auf diese Weise wird einerseits eine Rotationsbewegung des Linsenhalters 12 durch das Gelenk 22 ermöglicht, andererseits ist auch eine Linearbewegung in Richtung der Zylinderachse möglich.

Weiters ist noch vorgesehen, dass die optisch relevante Baueinheit 10, d.h. in dem gezeigten Beispiel der Halter 12 an einem dem ersten Gelenk 22 gegenüberliegenden bzw. abgewandten Bereich mit einem weiteren Gelenk 52 an dem Gehäuse 100 gelagert ist.

Die Formulierung "an dem Gehäuse gelagert" bedeutet dabei "gelagert in Bezug auf das Gehäuse"; d.h., die Lagerung muss nicht zwangsläufig direkt an dem Gehäuse erfolgen, sondern kann auch anderen Bauteilen, die an dem Gehäuse feststehend angebracht sind, erfolgen.

In dem gezeigten Beispiel erfolgt die Lagerung mit dem Gelenk 52 an einem Zwischenteil 60, welches Zwischenteil fix mit dem Gehäuse 100 verbunden oder mit diesem verbindbar ist. An diesem Zwischenteil ist in der gezeigten Ausführungsform auch der zweite Antrieb 30 befestigt.

Das zweite Gelenk 52 ist wiederum ein Kugelgelenk, welches aus einer Gelenkskugel 52', die an dem Zwischenteil 60 angeordnet ist, und einer Gelenkspfanne 52" an der optischen Baueinheit 10 bzw. an dem Halter 12 besteht. Die Kugel 52' wird in die Pfanne 52" eingeklipst. Eine Scheibe 62 dient quasi als Verschluss zur Erhöhung der Stabilität. Blendenteil 61 vervollständigt gemeinsam mit den Lagerstellen 42 eine Art "Lagergabel", wobei das Blendenteil 61 in Z-Richtung aufgesteckt wird.

Weiters ist noch ein Stift 63 vorgesehen, der in entsprechende Öffnungen in den Bauteilen 60, 61, 40 eingeschoben, vorzugsweise hineingepresst ist und diese Bauteile zusammenhält, wobei sich das Mitnehmerelement 40 in Bezug auf das Zwischenteil 60 um die Achse V drehen kann.

Mit einer erfindungsgemäßen Anordnung wird bei einem Verschwenken um die horizontale Achse H, die sich in einem oberen Bereich, vorzugsweise im Bereich des oberen Kugelgelenkes 52 befindet, mit dem ersten Antrieb 20 die optische Baueinheit 10 um die Lagerstellen 41, 42 verschwenkt. Das obere Kugelgelenk 52 lässt dabei diese Verschwenkbewegung zu. Durch die Ausgestaltung des unteren Kugelgelenkes 22, insbesondere der zylinderförmigen Lagerstelle 22" ist eine geringe Auf/Ab-Bewegung der optischen Baueinheit 10 möglich, sodass die Verschwenkbewegung nicht behindert wird.

Bei einem Verschwenken um die vertikale Achse V mit dem zweiten Antrieb 30 nimmt das Mitnehmerelement 40 über die Lagerstellen 41, 42 die optische Baueinheit 10 mit, diese wird entsprechend um die Achse V verdreht. Die Kugelgelenke 22, 52 lassen diese Bewegung zu.

Anzumerken ist, dass die beiden Achsen H, V immer normal zueinander stehen. Die Ausrichtung der von H, V aufgespannten Ebene normal auf die optische Achse X ist aber nur in der "grundstellung" gegeben, bei einem Verschwenken der Baueinheit z.B. um die Achse V liegt die Achse H nicht mehr in einer Normalebene zu X (und umgekehrt).

## Patentansprüche

1. Beleuchtungsvorrichtung (1) für einen Kraftfahrzeugscheinwerfer, wobei die Beleuchtungsvorrichtung (1) eine optische relevante Baueinheit (10) umfasst, welche Baueinheit (10) um zwei zueinander normal verlaufende Verschwenkachsen (H, V) in einem Gehäuse (100) verschwenkbar ist,
wobei zum Verschwenken um jede der Achsen (H, V) jeweils ein Antrieb (20, 30) vorgesehen ist,
wobei die beiden Antriebe (20, 30) feststehend in dem Gehäuse (100) angeordnet sind,
wobei der erste Antrieb (20) zum Verschwenken der Baueinheit (10) um die erste Achse (H) ein Linearantriebselement (21) umfasst bzw. antreibt, welches Linearantriebselement (21) mit der Baueinheit (10) mittels eines Gelenkes (22) gelenkig verbunden ist,
und wobei weiters ein Mitnehmerelement (40) vorgesehen ist, welches Mitnehmerelement (40) zumindest eine Lagerstelle (41, 42), vorzugsweise zwei Lagerstellen (41, 42), aufweist, worin die Baueinheit (10) um die erste Achse (H) verschwenkbar gelagert ist,
und wobei das Mitnehmerelement (40) in einer Ebene normal auf die zweite Achse (V) um diese zweite Achse (V) verschwenkbar in dem Gehäuse (100) gelagert ist,
und wobei die zumindest eine Lagerstelle (41, 42) derart ausgebildet ist, dass bei einem Verdrehen des Mitnehmerelementes (40) um die zweite Achse (V) die Baueinheit (10) mit dem Mitnehmerelement (40) mit verdreht wird,
und wobei der zweite Antrieb (30) das Mitnehmerelement (40) um die zweite Achse (V) verdreht,
**dadurch gekennzeichnet, dass**
die erste und die zweite Achse (H, V) einander schneiden, und
die optisch relevante Baueinheit (10) weiters an einem dem ersten Gelenk (22) gegenüberliegenden bzw. abgewandten Bereich mit einem weiteren Gelenk (52), vorzugsweise einem Kugelgelenk, an dem Gehäuse (100) gelagert ist.

2. Beleuchtungsvorrichtung nach Anspruch 1, **dadurch gekennzeichnet, dass** die erste Achse (H) eine Horizontalachse ist, welche normal auf die optische Achse (X) der Beleuchtungsvorrichtung (1) steht.

3. Beleuchtungsvorrichtung nach Anspruch 1 oder 2, **dadurch gekennzeichnet, dass** die zweite Achse (V) eine Vertikalachse ist, welche normal auf die erste Achse (H) und die optische Achse (X) der Beleuchtungsvorrichtung (1) steht.

4. Beleuchtungsvorrichtung nach einem der vorhergehenden Ansprüche, **dadurch gekennzeichnet, dass** die zweite Achse (V) in der Nähe des Massen-Schwerpunktes oder durch den Massen-Schwerpunkt der optisch relevanten Baueinheit (10) verläuft.

5. Beleuchtungsvorrichtung nach einem der vorhergehenden Ansprüche, **dadurch gekennzeichnet, dass** das Linearantriebselement (21), welches von dem ersten Antrieb (20) angetrieben ist, eine Zahnstange ist.

6. Beleuchtungsvorrichtung nach einem der vorhergehenden Ansprüche, **dadurch gekennzeichnet, dass** das Mitnehmerelement (40) zumindest einen Zahnkranz umfasst, mit zumindest einem Zahnkranz verbunden ist oder als Zahnkranz ausgebildet ist, wobei vorzugsweise der zweite Antrieb (30) ein oder mehrere, z.B. zwei Antriebsritzel (31), antreibt, welche Ritzel (31) den zumindest einen Zahnkranz (44) antreiben.

7. Beleuchtungsvorrichtung nach einem der vorhergehenden Ansprüche, **dadurch gekennzeichnet, dass** der erste und/oder der zweite Antrieb (20, 30) als rotierende(r) Antrieb(e) ausgebildet sind (ist).

8. Beleuchtungsvorrichtung nach einem der vorhergehenden Ansprüche, **dadurch gekennzeichnet, dass** das Gelenk (22) ein Kugelgelenk ist.

9. Beleuchtungsvorrichtung nach Anspruch 8, **dadurch gekennzeichnet dass** das Kugelgelenk (22) eine Kugel (22') umfasst, welche an der Baueinheit (10) oder an dem Linearantriebselement angeordnet ist, und wobei die Kugel in einer Lagerstelle (22") gelagert ist, welche an dem Linearantriebselement (21) oder der Baueinheit angeordnet und bevorzugt zylinderförmig ausgebildet ist.

10. Beleuchtungsvorrichtung nach einem der Ansprüche 1 bis 9, **dadurch gekennzeichnet, dass** die optisch relevante Baueinheit (10) eine Linse (11) und einen Linsenhalter umfasst, wobei der Linsenhalter um die beiden Achsen (H, V) verschwenkbar gelagert ist.

11. Beleuchtungsvorrichtung nach einem der Ansprüche 1 bis 9, **dadurch gekennzeichnet, dass** die optisch relevante Baueinheit (10) durch ein Lichtmodul gebildet ist, welches Lichtmodul um die beiden Achsen (H, V) verschwenkbar gelagert ist.

12. Beleuchtungsvorrichtung nach einem der vorhergehenden Ansprüche, zur Erzeugung eines dynamischen Kurvenlichts und einer dynamischen Leuchtweitenregulierung.

13. Fahrzeugscheinwerfer mit zumindest einer Beleuchtungsvorrichtung (1) nach einem der Ansprüche 1 bis 12.

## Claims

1. A lighting apparatus (1) for a motor vehicle headlight, wherein the lighting apparatus (1) comprises an optically relevant unit (10), which unit (10) can pivot in a housing (100) about two pivot axes (H, V) that run normal to one another,
wherein a drive (20, 30) is provided, in each instance, for pivoting about each of the axes (V, H),
wherein the two drives (20, 30) are disposed in the housing (100) in fixed manner,
wherein the first drive (20) comprises or drives a linear drive element (21) for pivoting the unit (10) about the first axis (H), which linear drive element (21) is connected with the unit (10) in articulated manner, by means of a joint (22),
and wherein furthermore, a driver element (40) is provided, which driver element (40) has at least one bearing location (41, 42), preferably two bearing locations (41, 42), in which the unit (10) is mounted so as to pivot about the first axis (H),
and wherein the driver element (40) is mounted in the housing (100) so as to pivot about the second axis (V), in a plane normal to the second axis (V),
and wherein the at least one bearing location (41, 42) is rotated along with the driver element (40) when the driver element (40) is rotated about the second axis (V),
and wherein the second drive (30) rotates the driver element (40) about the second axis (V),
**characterized in that**
the first and the second axis (H, V) intersect one another, and
the optically relevant unit (10) is furthermore mounted on the housing (100) in a region that lies opposite or facing away from the first joint (22), with a further joint (52), preferably a ball joint.

2. The lighting apparatus according to claim 1, **characterized in that** the first axis (H) is a horizontal axis, which stands normal to the optical axis (X) of the lighting apparatus.

3. The lighting apparatus according to claim 1 or 2, **characterized in that** the second axis (V) is a vertical axis, which stands normal to the first axis (H) and the optical axis (X) of the lighting apparatus (1).

4. The lighting apparatus according to one of the preceding claims, **characterized in that** the second axis (V) runs in the vicinity of the center of gravity or through the center of gravity of the optically relevant unit (10).

5. The lighting apparatus according to one of the preceding claims, **characterized in that** the linear drive element (21), which is driven by the first drive (20), is a gear rack.

6. The lighting apparatus according to one of the preceding claims, **characterized in that** the driver element (40) comprises at least one gear crown, is connected with at least one gear crown or is configured as a gear crown, wherein preferably, the second drive (30) drives one or more, for example two drive pinions (31), which pinions (31) drive the at least one gear crown (44).

7. The lighting apparatus according to one of the preceding claims, **characterized in that** the first and/or the second drive (20, 30) is/are configured as (a) rotating drive(s).

8. The lighting apparatus according to one of the preceding claims, **characterized in that** the joint (22) is a ball joint.

9. The lighting apparatus according to claim 8, **characterized in that** the ball joint (22) comprises a ball (22') that is disposed on the unit (10) or on the linear drive element, and wherein the ball is mounted in a bearing location (22") that is disposed on the linear drive element (21) or the unit, and preferably is configured to be cylindrical.

10. The lighting apparatus according to one of claims 1 to 9, **characterized in that** the optically relevant unit (10) comprises a lens (11) and a lens holder, wherein the lens holder is mounted so as to pivot about the two axes (H, V).

11. The lighting apparatus according to one of claims 1 to 9, **characterized in that** the optically relevant unit (10) is formed by a light module, which light module is mounted so as to pivot about the two axes (H, V).

12. The lighting apparatus according to one of the preceding claims, for generation of a dynamic cornering light and dynamic headlight beam height control.

13. A vehicle headlight having at least one lighting apparatus (1) according to one of claims 1 to 12.

## Revendications

1. Dispositif d'éclairage (1) pour un phare de véhicule automobile, dans lequel le dispositif d'éclairage (1) comporte un module optiquement pertinent (10), lequel module (10) est pivotant autour de deux axes de pivotement (H, V) s'étendant perpendiculairement l'un à l'autre dans un boîtier (100) ;
dans lequel, pour le pivotement autour de chacun des axes (H, V), une commande respective (20, 30) est prévue ;
dans lequel les deux commandes (20, 30) sont disposées de façon fixe dans le boîtier (100) ;
dans lequel la première commande (20) comporte ou commande un élément de commande linéaire (21) pour le pivotement du module (10) autour du premier axe (H), lequel élément de commande linéaire (21) est relié de façon articulée avec le module (10) au moyen d'une articulation (22) ;
et dans lequel en outre un élément d'entraînement (40) est prévu, lequel élément d'entraînement (40) présente au moins un point d'appui (41, 42), de préférence deux points d'appui (41, 42) sur lesquels le module (10) est monté pivotant autour du premier axe (H) ;
et dans lequel l'élément d'entraînement (40) est monté dans le boîtier (100) pivotant autour de ce second axe (V) dans un plan perpendiculaire au second axe (V) ;
et dans lequel le au moins un point d'appui (41, 42) est conçu de telle sorte que le module (10) tourne avec l'élément d'entraînement (40) autour du second axe (V) lors d'une rotation de l'élément d'entraînement (40) ;
et dans lequel la seconde commande (30) fait tourner l'élément d'entraînement (40) autour du second axe (V),
**caractérisé par le fait que**
les premier et second axes (H, V) se coupent l'un l'autre ; et
le module optiquement pertinent (10) en outre est monté sur le boîtier (100) sur une région opposée à ou écartée de la première articulation (22) avec une autre articulation (52), de préférence une articulation à rotule.

2. Dispositif d'éclairage selon la revendication 1, **caractérisé par le fait que** le premier axe (H) est un axe horizontal, lequel est perpendiculaire à l'axe optique (X) du dispositif d'éclairage (1).

3. Dispositif d'éclairage selon l'une des revendications 1 ou 2, **caractérisé par le fait que** le second axe (V) est un axe vertical, lequel est perpendiculaire au premier axe (H) et à l'axe optique (H) du dispositif d'éclairage (1).

4. Dispositif d'éclairage selon l'une des revendications précédentes, **caractérisé par le fait que** le second axe (V) s'étend au voisinage du centre de gravité des masses ou par le centre de gravité des masses du module optiquement pertinent (10).

5. Dispositif d'éclairage selon l'une des revendications précédentes, **caractérisé par le fait que** l'élément de commande linéaire (21), lequel est commandé par la première commande (20), est une crémaillère.

6. Dispositif d'éclairage selon l'une des revendications précédentes, **caractérisé par le fait que** l'élément d'entraînement (40) comporte au moins une couronne dentée, est relié à au moins une couronne dentée ou est réalisé en tant que couronne dentée, dans lequel, de préférence, la deuxième commande (30) commande un ou plusieurs, de préférence deux pignons d'entraînement (31), lesquels pignons (31) entraînent la au moins une couronne dentée (44).

7. Dispositif d'éclairage selon l'une des revendications précédentes, **caractérisé par le fait que** la première et/ou la seconde commande (20, 30) est (sont) réalisée(s) en tant qu'actionneur(s) rotatif(s).

8. Dispositif d'éclairage selon l'une des revendications précédentes, **caractérisé par le fait que** l'articulation (22) est une articulation à rotule.

9. Dispositif d'éclairage selon la revendication 8, **caractérisé par le fait que** l'articulation à rotule (22) comporte une rotule (22'), laquelle est disposée sur le module (10) ou sur l'élément d'entraînement linéaire, et dans lequel la rotule est montée sur un point d'appui (22"), lequel est disposé sur l'élément d'entraînement linéaire (21) ou le module et est, de préférence, réalisé de forme cylindrique.

10. Dispositif d'éclairage selon l'une des revendications 1 à 9, **caractérisé par le fait que** le module optiquement pertinent (10) comporte une lentille (11) et un porte-lentille, dans lequel le porte-lentille est monté pivotant autour des deux axes (H, V).

11. Dispositif d'éclairage selon l'une des revendications 1 à 9, **caractérisé par le fait que** le module optiquement pertinent (10) est réalisé par un module d'éclairage, lequel module d'éclairage est monté pivotant autour des deux axes (H, V).

12. Dispositif d'éclairage selon l'une des revendications précédentes, pour la production d'un éclairage de virage dynamique et d'un réglage de distance d'éclairage dynamique.

13. Phare de véhicule automobile comportant au moins un dispositif d'éclairage (1) selon l'une des revendications 1 à 12.
